# EUROPEAN PATENT APPLICATION

(11) **EP 4 610 883 A1**
(43) Date of publication of application: **03.09.2025**
(21) Application number: 24165367.4
(22) Date of filing: 21.03.2024
(51) Int. Cl.: G06N 3/0455, G06N 3/092, G06N 3/0475, G06N 3/088, G06N 3/09

(54) **NETWORK FOR GENERATING TEST INPUT SEQUENCES TO TEST THE FUNCTION OF COMPUTING MODULES**

(30) Priority: 27.02.2024 EP 24160117
(71) Applicant: Technische Universität Darmstadt, 64289 Darmstadt (DE)
(72) Inventor: CHILESE, Marco, 64289 Darmstadt (DE); ROSTAMI, Mohamadreza, 64289 Darmstadt (DE); ZEITOUNI, Shaza, 64289 Darmstadt (DE)
(74) Representative: Zahn, Matthias

(57) **Abstract**

To test the operation of a computing module under test, a computer uses (400) a neural network that to generate (410, 450) a test input sequence to test (401) a pre-defined function of the module. The neural network has an internal structure of a generative language model, and it has been trained with a training input sequence of statements that are configured according to the pre-defined architecture of the module. Feedback from testing (401) can serve to optimize the network, such a during re-training (750).

## Description

### Technical Field

In general, the disclosure relates to the use of computers in the design process for computing devices. In particular, the disclosure relates to a computer and to a computer-implemented method for testing a pre-defined function of a computing device that comprises components in a pre-defined architecture.

### Background

Much simplified, computing devices have internal components that are arranged in a pre-defined structure. The devices provide one or more pre-defined functions, and the devices should show an expected behavior.

To give only a few examples, the computing devices can be controllers for industrial machines (e.g., in the function to implement control loops for machines parameters), controllers in vehicles (e.g., to implement functions in a car), components for telecommunication devices (e.g., to provide digital signal processing DSP in senders and transmitters), components in home appliances, or building automation, or functional units to serve other purposes.

Usually, the computing devices would be implemented in hardware (i.e., in electronic circuitry and with input terminals and output terminals). The circuitry usually comprises semiconductor devices (fabricated in any technology) that can be mounted on printed circuit boards (PCB) or the like.

The skilled person is familiar with further aspects. For example, the computing devices can be processors (for that the function is also defined through instructions), can be field programmable gate arrays (FPGA) that are programmed, or can provide computing otherwise.

The internal components of the computing devices, as well as structure, functions and behavior of the devices are documented in one or more design documents. These documents become available during the design process. The design documents describe further details, such as the operation of the components.

The skilled person is familiar with such descriptions and may occasionally use different terms. For example, a processor would be described in terms of its architecture and of its instruction set (e.g., instruction set architecture ISA). Further documents may be used as well (e.g., standards that describe test procedures).

Ideally, the components and their internal structure correspond to the pre-defined functions exactly so that the computing devices show the functions as expected. Real-life scenarios approximate the ideal but deviations have to be expected.

Device manufacturers seek to identify deviations (such as, for example, in structure and function) as early as possible, and whenever possible before manufacturing the hardware (i.e. before its fabrication). Deviations may show up in all components, or in a subset of the components.

From a high-level perspective, identifying deviations belongs to verification, validation, evaluation or other phases that are usually part of the design process. But these time-consuming phases should be completed before manufacturing the devices in hardware.

Simplified, test inputs can be applied to the computing device (by simulation or emulation, or by applying the input to hardware), and the operation of the device can be monitored. There are several ways to select the test inputs. The skilled person is familiar with selecting test inputs at random, and with selecting test inputs according to an expected output in combination with un-expected inputs and so on.

The skilled person seeks to use an optimized the coverage of the test inputs (i.e., selection of input sets) and the skilled person would optimize the test input according to goals such as:
- in general, to detect functional deviations of the computing devices (e.g., so-called "functional bugs", or functional faults);
- more in particular, to detect functional deviations that are security vulnerabilities (e.g., for security relevant features of the equipment);
- to detect situations in that the computing devices would show unexpected or undesired behavior, such as to consume relatively high amounts of energy; and
- to detect deviations in components that would not react on input changes (such as components that are "hard to reach").

More advanced test input may allow detecting if pass-phrases or keys for security critical components could be determined.

So-called fuzzing techniques allow to start testing with an initial test input that is modified for each test repetition. Modifications can be obtained by evolution, by triggering mutations and by other applying other techniques. The skilled person is familiar with bit-or-byte-flipping, with data swapping, with value deleting, with value cloning, etc.

With new test repetitions, fuzzing also allows to modify the part of the input set that was responsible for feedback (from the output of the computing devices).

But fuzzing still comes with the constraint that the initial test input may not trigger the device to operate, or may not trigger all its components to operate. Consequently, feedback would not be available, and feedback may not be the available to reach test input to be modified in the repetitions. As test inputs may not cover all the components, non-functioning components may remain undetected.

### Summary

As disclosed herein, the test input - in the form of a test input sequence with test input statements - is generated by a neural network that is a language model. The network can have an internal structure of a generative transformer. The network applies a weight set that has been obtained by training with a training input sequence (that is a collection of training input statements). As the training input statements are configured according to the pre-defined architecture of the components in the computing device, the network can generate the test input sequence according to the architecture.

Having the network trained with existing input statements that fit the architecture increases the chances to start the test with an input data sequence for that a module under test is responsive. Some functions may require activities in so-called "hard-to-reach parts" of the computing device, and they may be associated with particular input statements. Appropriate training allows to generate input statements for such functions.

Feedback can optionally be used both for training and for testing, and further input data sequences are expected to have the module responsive as well.

A computer is adapted to control testing a pre-defined function of a computing module that comprises components arranged in a pre-defined architecture (the module under test hereinafter). The computer has a generator unit that is adapted to generate a test input sequence with test input statements for the module under test. The computer is characterized in that the generator unit is implemented as a neural network that is a language model and that applies a weight set obtained by training. The training has been performed with a training input sequence of training input statements that are configured according to the pre-defined architecture of the components. The generator unit is adapted to obtain feedback data from the module under test and to re-train the neural network.

Optionally, the neural network is implemented in a structure of a generative language model that is a generative transformer.

Optionally, the generator unit comprises an encoder sub-unit that is adapted to code the training input statements into input code statements during training, and a decoder sub-unit that is adapted to de-code output code statements to the test input statements for the module under test during the generation of the test input sequence. Both the encoder sub-unit and the decoder sub-unit are pre-trained according to the training input statements that belong to the pre-defined architecture.

Optionally, the generator unit is adapted to obtain feedback data from the module under test and to control the neural network to enhance the generation of particular input statements.

Optionally, the generator unit is adapted to control the neural network by partially re-training the neural network.

Optionally, the generator unit is adapted to receive feedback data from a sensor feedback unit that - during testing - monitors the module under test through a first sensor that obtains data that is internal to the module under test, or monitors the module under test through a second sensor that obtains data that is external to the module under test.

Optionally, a sensor feedback unit provides sensor feedback data to the generator unit that is adapted to modify its weight set according to the sensor feedback data. The sensor feedback unit receives feedback data, that is first feedback data from a first sensor that is associated with the components of the module under test, or that is second feedback data from a second sensor that is associated with measurement sensors to measure physical behavior of the module under test.

Optionally, the sensor feedback unit is adapted to process first feedback data as data regarding the usage of individual components of the module under test, and/or data regarding coverage of the individual components.

Optionally, the sensor feedback unit is adapted to process second feedback data as data regarding activity and inactivity of the module under test as a whole, and/or data regarding energy consumption of the module under test.

Optionally, the computer is adapted for testing the pre-defined function of the module under test, wherein the generator unit generates a test input sequence with one or more instructions to challenge a security functionality of the module under test.

Optionally, the computer comprises an evaluator unit that is adapted to receive test output statements from the module under test and that is adapted to provide test result statements. The evaluator unit is adapted to provide evaluator feedback data to control the neural network to enhance the generation of particular input statements. Feedback data from the evaluator unit is thereby used to optimize the neural network. The evaluator feedback data are data indicative that the output statements are categorized into a first category of expected statements and a second category non-expected statements, and/or data indicative of the quality of the output statements. The feedback can indicate if the module under test executes the instructions correctly or if the module under test shows an expected behavior.

Optionally, the generator unit and the evaluator module are adapted to communicate with a module under test that is implemented, selected from the following: a module with an environment in that the pre-defined function is described by hardware description language, and a module implemented with the components in hardware.

The computer can be adapted for testing the pre-defined function of the module under test, wherein the generator unit can be adapted to generate a test input sequence with one or more instructions to compute test output statements. The pre-defined function of the module under test can be an input-to-output calculation function.

The disclosure also explains the use of a neural network (such as a network that has an internal structure of a pre-trained generative transformer) to generate a test input sequence with test input statements to test a pre-defined function of a computing module that is available during testing as a module under test. The computing module has components that are configured according to the pre-defined architecture. The neural network has been trained with a training input sequence of training input statements that are configured according to the pre-defined architecture.

The disclosure explains a computer-implemented method to provide a test input sequence for testing a pre-defined function of a computing module that comprises components arranged in a pre-defined architecture for providing the pre-defined function. In a training step, the computer trains a neural network that is a word or text generator network (for example, by having an internal structure of a generative transformer). Training comprises that the network receives a training input sequence of training input statements that are configured according to the pre-defined architecture of the components. In a generating step, the neural network generates a test input sequence with test input statements for the computing module.

Optionally, there are further steps to provide the test input sequence with the test input statements to the computing module, with operating computing module, and with repeating the training by reinforcement leaning (RL). The feedback for RL is selected from the following: first feedback data from a first sensor that is associated with the components of the computing module; second feedback data from a second sensor that is associated with measurement sensors to measure physical behavior of the computing module; and third feedback data that is associated with the data output of the computing module.

### Brief Description of the Drawings

FIG. 1 illustrates an overview to an arrangement for testing a pre-defined computing function of a computing module, wherein the arrangement comprises a generator unit with a neural network to generate input statements for the module;
FIG. 2 illustrates a further aspect of the arrangement;
FIG. 3 illustrates input statements to the computing module, as well as illustrates output statements, and result statements;
FIG. 4 illustrates flow-charts for training the neural network, a computer-implemented method to provide an input sequence for testing, as well as testing itself;
FIG. 5 illustrates a symbolic overview to internal structures for the module, with different architectures;
FIG. 6 illustrates input statements with details on bit level so that the statements can be regarded as written in machine language;
FIG. 7 illustrates a statement in variations for a particular architecture;
FIG. 8 illustrates the neural network of the generator unit during training;
FIG. 9 illustrates a block diagram of the generator unit with an encoder sub-unit, neural network, and with a decoder sub-unit;
FIG. 10 illustrates a diagram with development stages for the computing device;
FIG. 11 illustrates a diagram of a computer in an embodiment with a sensor feedback unit;
FIG. 12 illustrates the module under test, with components and illustrates different configurations for the generator unit;
FIG. 13 illustrates a classification of generated test input statements according to feedback, and thereby gives an example for training the neural network by reinforcement learning; and
FIG. 14 illustrates a generic computer.

### Detailed Description

### Terminology

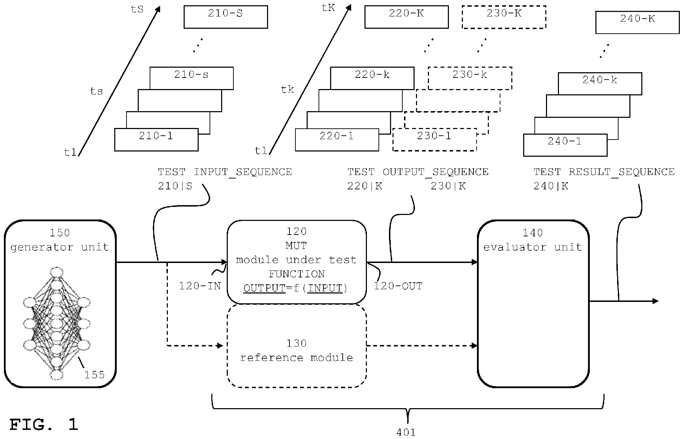

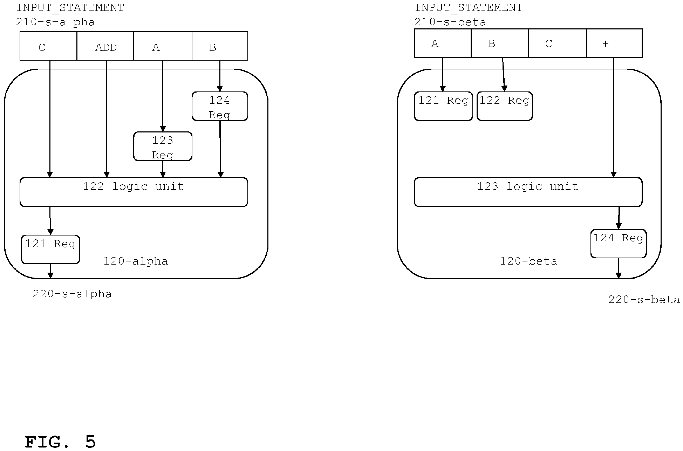

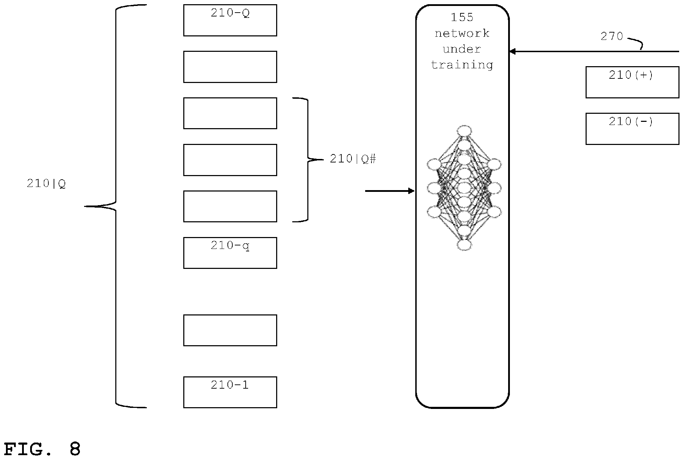

The description refers to machine-learning and describes the operation of a neural network during two phases: the training phase and the test phase. The words "test" and "training" will be used as attributes, such as in FIG. 1 with "test statements" and the like, or in FIG. 8 with "training statements". For some figures, such as FIG. 5 that describe structures, such a distinction into phases does not matter. The description therefor leaves the attributes out (i.e., writes "statements").

The trained network applies test input data to the computing device, and the operation of the device is monitored. During testing, the computing device can be implemented by computer simulation (or emulation), or by hardware. For simplicity, the description uses the term "module" collectively for both implementations. A distinction will be discussed again at the end with implementations ~1 (simulation) and ~2 (hardware).

The module has
- at least one input to receive test input statements and
- at least one output to provide test output statements.

Regarding the granularity of test input data, the description differentiates "test input statements" and "test instructions". A test statement is a data set that arrives at the module at one point in time. A test instruction is a data set that causes the module to provide a test output statement, no matter how many test input statements that test instruction may have.

To support understanding, the description occasionally refers to the analogy of human languages. However, the network applies test input data to the computing device that serve as the test instructions for the device. The instructions trigger the processing device to perform a pre-defined technical function.

### Overview

FIG. 1 illustrates an overview to testing arrangement 140/150 to test a pre-defined computing function (FUNCTION) of computing module 120. Testing is understood in the sense to verify or to validate that computing module 120 (module under test) performs the function as pre-defined.

Testing arrangement 140/150 can be implemented by one or more computers, but testing arrangement 140/150 can also be distributed to separate computers. Testing arrangement 140/150 comprises generator unit 150 to provide test input data to computing module 120 and comprises evaluator unit 140 to evaluate test output data from computing module 120. In other words, testing arrangement 140/150 is a computerized arrangement, and testing arrangement 140/150 can be considered as computer system 140/150.

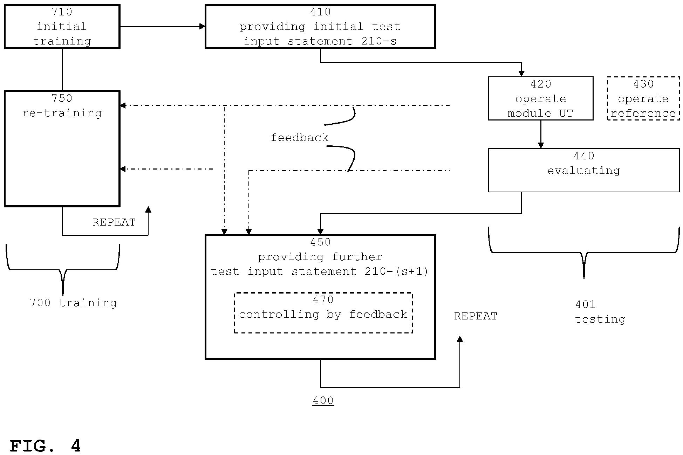

Generator unit 150 executes a computer-implemented method (cf. item 400 in FIG. 4) to provide test input data for testing 401 a pre-defined function of computing module 120, in the form of test input sequence 210|S with test input statements 210-s.

Testing 401 also comprises that computing module 120 receives the test input data and provides the test output data to evaluator unit 140. Testing 401 is not part of the method.

As it will be explained, module 120 comprises computing components (cf. items 121, 122, 123, 124 in FIG. 5 for an example) that are arranged in a pre-defined architecture. Architectures are known in the art, and a prominent example is the above-mentioned ISA. The description refers to simplified and fictitious architectures. In the example, module 120 should have the architecture "alpha" (cf. FIG. 5).

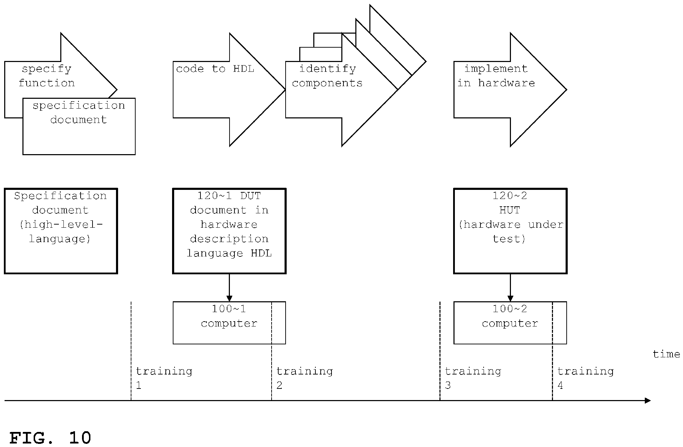

Depending on a design stage (cf. FIG. 10), module 120 can
- be implemented in software (i.e., a computer simulates or emulates the operation of the computing module), or
- be implemented in hardware (i.e., the device that has been manufactured already, at least as a prototype; and it is able to receive test input data and to provide test output data by electrical signals).

### Testing the function

There is an overall goal to manufacture a computing device (i.e., to implement it in hardware) that provides the computing function. But there is also an intermediate goal to test the design of the device before it is to be implemented in hardware.

As the pre-defined function is a computing function, module 120 is a computing module. It is convenient to assume that module 120 has logical input 120-IN and has logical output 120-OUT, but the skilled person understands that both input and output signals can go over the same physical terminals. (In hardware implementations, input statements and output statements may be communicated over the same physical hardware.)

The computing function is a function that is defined by computation, such as the following.
- The computing function can be a numerical function to relate one or more numerical values that belong to an instruction (at logical input 120-IN) to one or more numerical values at logical output 120-OUT. The function can be noted as OUTPUT = f(INPUT). The instruction at logical input 120-IN can define the relation. For example, the relation can be a mathematical function such as addition, subtraction, multiplication and so on. The relation can be a pre-defined mapping between input data and output data (in a table or the like).
- The computing function can comprise security functionality with one or more goals, among them to provide authentication, to provide data integrity, to protect data against disclosure, to discover side-channel attacks to protect against security vulnerabilities and so on. The skilled person is familiar with such functionality and can apply particular calculations. For example, a particular function could be the calculation of a hash value that belongs to a message (e.g., OUTPUT = HASH (INPUT). Or, a particular function could be the encryption (or decryption) of an input message to or from a cipher [ ] (e.g., OUTPUT = [INPUT] for encryption, OUTPUT = [INPUT]⁻¹ for decryption). In view of this simplified figure, the message would be provided to logical input 120-IN and the hash or cipher would be available at logical output 120-OUT.
- The computing function can comprise image processing or time-series processing.

FIG. 1 shows computing module 120 here as the module under test. The description therefore uses the acronym "MUT 120".

From left to right, FIG. 1 illustrates testing arrangement 140/150 with
- generator unit 150 that is adapted to generate test input sequence 210|S with test input statements 210-s for MUT 120, and
- evaluator unit 140 that is adapted to receive test output statements 220-k (that MUT 120 provides according to the pre-defined function) and to evaluate them.

MUT 120 itself does not belong to testing arrangement 140/150 because MUT 120 and arrangement 140/150 can be separate entities. The entities can be supervised by different human operators. The description emphasizes the separation also by differentiating the terms "module" and "unit".

In a first implementation ("on-premise"), arrangement 140/150 and MUT 120 would be located at a single physical location, such as in a laboratory, and a single operator would watch the testing.

In a second implementation ("remote" or "cloud"), arrangement 140/150 and MUT 120 would be located in separate physical locations. The second implementation allows to perform the test in collaboration between two or more organizations. In such a setting, a first organization can operate generator unit 150 to generate a test input sequence 210|S, a second organization can operate MUT 120 to obtain test output sequence 220|S, and a third organization can operate evaluator unit 140.

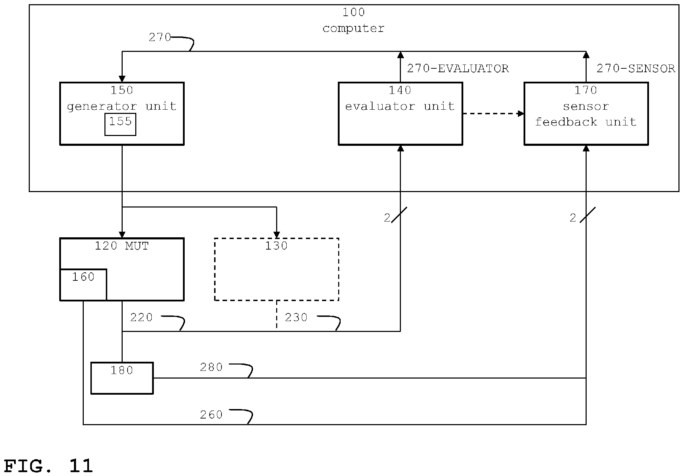

Other arrangements can be implemented as well. An example for a distribution with MUT 120 and arrangement 140/150 to separate locations will be explained with FIG. 11 (with computer 100 that implements generator unit 150 and evaluator unit 140, as well as some other, optional units).

### Test timing

An arrow illustrates the progress of time, with time-slots t1, t2 ... ts ... tS as well as t1, t2 ... tk ... tK.
- Test input statements 210-s that are consecutively applied to logical input 120-IN of MUT 120 (consecutive input statements 210-s) form test input sequence 210|S. A first statement goes to MUT 120 at a first time-slot, a second statement follows at a second time-slot, and so on.
- Test output statements 220-k that are consecutively provided at logical output 120-OUT of MUT 120 (consecutive test output statements 220-k, tk time-slots) form test output sequence 220|K.
- Likewise, consecutive test result statements 240-k form test result sequence 240|K.
- Due to the above-mentioned variable number of test input statements 210-s per test instruction, test input statements 210-s and test output statements 220-k are not necessarily in synchronization with each other. The figure is simplified in showing examples in that time-slots ts and tk fall together. The time that MUT 120 requires to operate as well as propagation delays are ignored.

### Testing the behavior

In principle, testing arrangement 140/150 can also be used to test a pre-defined behavior of computing module 120. Testing behavior is an additional test approach.

In operation, computing devices may show phenomena that could cause errors. To give a simplified example, the computing devices should have multiple components that can perform calculations (e.g., multiple cores or calculation units in a processor device). The devices should have auxiliary functions to distribute calculations to the components equally. Such distributions may be desired because - in hardware implementations - the calculating components (e.g., located on a first area of the chip) may warm up more than the non-calculating components (e.g., located on a second area of the same chip).

The skilled person is familiar with such topics and describes phenomena in terms such as "coverage" or the like.

The skilled person is also familiar with simulating at least some of the behavior.

As the phenomena can be monitored (occasionally from the output statements alone), generating appropriate input statements is desired as well.

For simplicity, the description focuses on testing the function. But the computer-implemented method to provide a test input sequence 210|S (for testing 401 the pre-defined function) can also be applied to test a pre-defined behavior. The difference between both approaches lies in the evaluations. A behavior evaluator would not necessarily have to evaluate the output, but rather to evaluate the phenomena.

### Constraints for the generator

The testing arrangement (for the function) has several constraints:
- Overall testing (all S time-slots) requires an overall time and requires energy, but not every test input statement 210-s leads to test output statement 220-k that can be evaluated. Test result statements 240-k may simply no be available. Testing efficiency can roughly be estimated as the ratio of S (i.e., the number of test input statements) over the number K1 (K1 < S) of test result statements. The ratio would be K1/S, with K1/S = 1 being the ideal ratio (for single-statement instructions).
- In applying a slightly different granularity, testing efficiency could also be estimated by counting test instructions, but the problem of missing test result statement remains. In other words, testing efficiency is related to the time it takes to perform the tests, to the electrical energy spend by the units (e.g., units 150 and 140 in FIG 1, also - optionally - units 160, 170, 180 in FIG. 11). Speeding up the test and reducing its energy impact is of interest.
- Once reason for not having test result statements 240-k can be an architecture mismatch. Particular test input statements 210-s may not lead to test result statements. Mismatching test input statements 210-s decrease K1. In other words, a test input statement 210-s applied to MUT 120 of a particular architecture (e.g., alpha, FIG. 5) may lead to incorrect operation of MUT 120 (if that would be implemented in a different architecture, such as beta).
- MUT 120 may use data that should not be disclosed during testing (i.e., so-called sensitive data, such as, for example, encryption or decryption keys). However, some test input statements 210-s may trigger MUT 120 to disclose such data. Hence, some particular test input statements should be avoided during testing.

Traditionally there are two basic approaches to implement the generator, but constraints remain:
- As mentioned above, it is possible to use generators that provide test input statements in random patterns. In other words, a random generator would generate variants (of the test input statements). Consequently, a first sub-set of test input statements may match a particular architecture, but a second sub-set may not. Random patterns may end up in "brute force" approaches and eventually may lead to the disclosure of sensitive data (e.g., the mentioned encryption keys or the like).
- It is also possible to use generators that provide test input statements at random but with feedback (from an evaluator unit or from other feedback sources), so called fuzzing. The feedback can indicate, for example, that the statements match the architecture (or not) so that further statements (i.e., further sequences) an be generated with variations that match the architecture.

### Text generative network for the generator

As it will be explained in the following, generator unit 150 is implemented as neural network 155 that is able to generate words (and is able to generated sequences of words, i.e., texts). Network 155 is illustrated only symbolically because the internal structure is known in the art.

The following paper gives an overview: Junyi Li et al. "Pre-trained Language Models for Text Generation: A Survey", arXiv:2201.05273. Section 2.2 of this paper mentions a couple of pre-trained language PLMs.

The paper also mentions that PLMs are pre-trained on large-scale unlabeled corpora (cf. section 2.1.) and that text generation aims to produce plausible and readable text in a human language from input data (cf. the summary section).

Neural network 155 can use the internal structure of these networks (i.e., listed in section 2.2.) but statements 210-s (and sequences 210|S) are not in natural language.

As the statements to be generated have an analogy to words (in natural languages), a word generator network can be used (and can be trained accordingly.) As the analogy for sequences to be generated is "text", a text generator network can be used. For taking over the teaching of the paper, the conceptual difference between "word" and "text" is however not relevant.

Neural network 155 can have the internal structure of a generative transformer.

The weight set for network 155 has been obtained by training it with a collection of training input statements (training 700 in FIG. 4, statements 210-q in FIG. 8, in training input sequence 210|Q) that are configured according to the pre-defined architecture (alpha, beta) of the computing components (121, 122, 123, 124). Training will be explained with FIGS. 4 and 8. Once training has been completed, network 155 is pre-trained.

Collections of training input statements (or rather collections of training input sequences) are available, for example, in the form of computer programs in binary code. There is plenty of binary code available for modules in different architectures.

For example, the skilled person is familiar with compilers. Simplified, a compiler converts programs in source language (e.g., C, C++, JAVA) to programs in machine language (occasionally via intermediate codes). The compilers are specialized to the machine language (of the computing device). To stay with the fictitious example, an alpha-compiler provides machine code in the alpha language (for the alpha-architecture), a beta-compiler provides code in the beta language (for the beta-architecture), and so on.

In a more practical example, training can be performed with the so-called kernel of an operating system, for example, the operating system LINUX.

As mentioned, the term "pre-trained" stands for the training (cf. FIGS. 4 and 8). It is however possible to re-train (i.e., at least to re-train it partially, to fine-tune the network). An example for re-training with feedback data will be explained below (FIG. 4 for the method, FIG. 11 for the computer).

### Example for a generative pre-trained transformer (GPT)

Neural networks with GPTs are known in the art. Some of these networks are well-known due to their use in so-called large language models (LLM).

GPTs are explained in papers and are (commercially) available. The paper "GPT-4 Technical Report" (arXiv:2303.08774) gives an overview to the topology of a model that has been trained for natural language processing. A GPT with such a structure and/or topology can be used, provided that it is being trained accordingly (cf. training as explained herein).

### Optionally Using a Reference

FIG. 1 further illustrates reference module 130 (shown dashed). It has the same function as MUT 120, but the use of reference module 130 is optional. Both modules 120 and 130 would receive the same test input sequence 210|S. Evaluator unit 140 can compare test output statements 220-k from MUT 120 and test output statements 230-k from module 130, with k=1 to k=K. Consecutive further test output statements 220-k form further test output sequence 240|K.

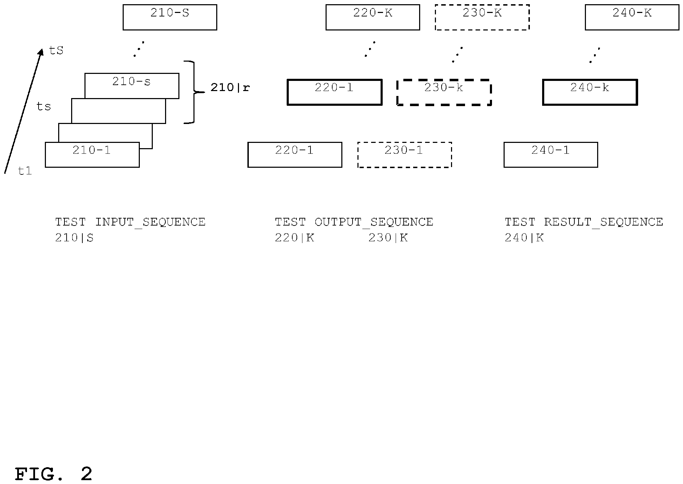

FIG. 2 illustrates a further aspect of the testing arrangement. In an alternative approach, test input statement sub-sequence 210|r has R subsequent test input statements 210-s (s = s, s+1, s+2 ... s+R). MUT 120 would provide test output statement 220-k.

Using the alternative approach can be required due to technical restrictions of MUT 120. An example for such a limitation is that MUT 120 receives data per time-slots (cf. ts in FIG. 1). This will be explained next.

### Single- and multi-statement instructions

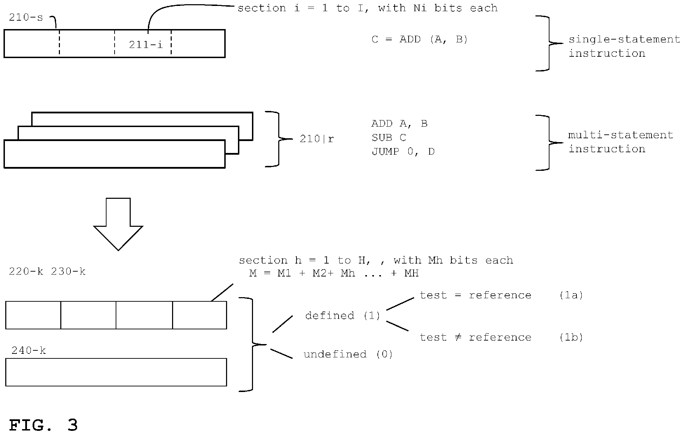

FIG. 3 illustrates
- test input statements 210-s and test input statement sub-sequence 210|r,
- test output statement 220-k, and test result statement 240-k.

As used herein, the description applies the following conventions:
- (one output per instruction, one-to-one) MUT 120 processes one test instruction and provides a corresponding test output statement. Evaluator unit 140 evaluates this test output statement. In other words, evaluator unit 140 evaluates what MUT 120 does in response to receiving a single test instruction.
- (one input statement per time-slot ts). As in many hardware implementations, MUT 120 receives data through a multi-bit data-bus (not illustrated), it receives a single test input statement 210-s per time-time-slot ts. The input statement can be considered as series of "words" with a characteristic number of bits (word length N).
- (instructions with variable number of statements). A single-statement test instruction is a test instruction that has a single test input statement 210-s. A multi-statement test instruction is a test instruction that uses a group of statements (i.e., test input statement sub-sequence 210|r).

A single test input sequence 210|S can comprise a mixture of single-statement test instruction with multi-statement test instructions.

Test input statement 210-s can have I sections 211-i, from i = 1 to i = I. Each section 211-i can have an individual number of bits Ni. The overall number of bits in test statement 210-s can therefore be estimated as N = N1 + N2 ... Ni ... NI. For example, there can be I = 4 sections with 4 bits each (e.g., N = 4 + 4 + 4 + 4 = 16). The number N can correspond to the number of bits in the data-bus (i.e., to the characteristic word length). If the data-bus has more bits, the remaining bits can be set to zero.

Test input statement 210-s can convey a single-statement test instruction. For example, such a test instruction can be an instruction that causes MUT 120 to add two integer numbers. Conveniently, the skilled person would note such a statement in letter-code such as "C = ADD (A, B)" (i.e., in so-called assembler language or the like). This notation simply avoids the bits, but MUT 120 receives the bits, not the letter-code.

Evaluator unit 140 evaluates test output statement 220-k according to one or more pre-defined criteria. For example, evaluator unit 140 can differentiate results C that really correspond to A+B from results that do not correspond to A+B. Evaluator unit 140 provides the result in test result statement 240-k.

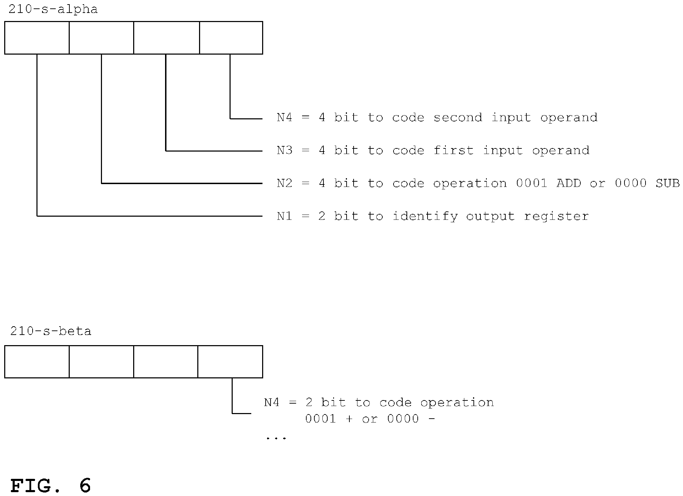

Assuming that MUT 120 receives test input statement 210 as a combination of N bits, there could be N² variants of the statement. Some of the sections have bits that follow some rules (cf. FIGS. 6-7), and that reduce the number of variants.

A plurality of test input statement 210-s (that are received consecutively) can convey a multi-statement test instruction. The figure writes test instruction 210-r. In the example (in letter code), there would be a first statement "ADD A, B", a second statement "SUB C" and a third statement "JUMP 0, D" (with a conditional jump). In implementations, the code would be given by bits (cf. FIGS. 6-7).

The number of test input statements per multi-statement test instruction can vary. The skilled person is able to communicate the borders (i.e., to identify the first and the last statement). As a side note, network 155 being trained (cf. FIG. 8) would learn that as well.

Regarding test output statements 220-k, they could have H sections, index h, with Mh bits each, and M = M1 + M2 ... Mh ... MH bits in total. Optionally, for test output statements 230-k from reference module 130, the same principle applies.

Regarding test result statement 240-k, they can represent the quality of MUT 120, for example, in the following:
- A test result statement can be defined (1) when evaluator unit 140 can process it (e.g. to compare test output statements 220-k and 230-k), otherwise is would be undefined (0).
- A defined rest result statement (1) can further be differentiated. For example, the output of MUD 120 matches the output of the reference module (1a) (e.g., test output = reference output, MUT 120 operates as reference module 130), or does not match (1b).

It is noted that evaluating a single test output statement 220-k does not establish whether MUT 120 performs the pre-defined calculation function, or not. As explained, there are multiple statements (cf. number K in FIG. 1). Looking at the numbers, testing would involve K test output statements (and K test result statements), K1 of them are defined and K0 are un-defined. In other words, a number of K0 test output statements can not be evaluated by evaluator unit 140. Having a non-evaluable test output statement (and hence a non-defined result statement) does not indicate malfunction of MUT 120 but may indicate that generator unit 150 may generate test input statements without effect (at MUT 120). There is a problem with generating such ineffective test input statements, and the description explains an approach to accommodate this problem by feedback.

### Applicability for training the network

The explanation in FIG. 3 focuses on test scenarios, but applies to training input statements 210-q (cf. FIG. 8) as well.

### Efficiency

Referring to the above-introduced efficiency, the following can be assumed:
- For case "random", the number K0 of un-defined test result statements is in the majority, and the number K1 of defined test result statements is in the minority. Testing (cf. the above problem) is performed with "wasted" test input statements. The ratio K1/S would be relatively low.
- For case "random with feedback", K0 would be still in the majority, and K1 still in the minority. But there would be an improvement in the ratio K1/S.
- For case "GPT" (as disclosed herein with generator units 150 using network 155), the statistics are expected to reverse. K1 would become the majority, K0 would become the minority.

FIG. 4 illustrates flow-charts for
- training 700 the neural network (left side of the figure, with initial training 710 and re-training 750),
- computer-implemented method 400 to provide test input sequence 210|S for testing 401 (center), as well as
- testing 401 (right side).

Method 400 is a computer-implemented method to provide test input sequence 210|S for testing 401 a pre-defined computing function of computing module 120 (i.e., MUT 120).

Method 400 comprises steps 410 and 450 in that the neural network (item 155 in FIG. 1) provides test input statements 210-s (i.e., test input sequence 210|S, 210| R).

Method steps 410 and 450 are presented in bold-line boxes because they are performed by the method-executing computer (cf. FIG. 1 the computer that runs generator unit 150).

In step 410, the computer provides test input statements 210-s (or 210|r, cf. FIGS. 2-3), and forwards them to MUT 120. For multi-statement instructions, the computer provides test input statement sub-sequences 210|r.

Step 420 ("operate MUT"), optional step 430 ("operate reference module") and step 440 ("evaluating") can be performed otherwise. These steps 420, 430 and 440 are summarized as testing 401.

It is contemplated to separate the activities for method 400 and for testing 401 to separate locations, for example as in the following:
- The designer (and/or the manufacturer) of MUT 120 operate (cf. in two options, as discussed with FIG. 10). Testing 401 is known in the art and therefore not further explained here.
- The method-executing computer is operated by a service provider (e.g., software as a service SaaS) to provide test input sequence 210|S in steps 410 and 450.

In step 450, the computer provides further test input statements 210-(s+1) (or sub-sequences 210-(r+1)), symbolized by increasing indices s (or r), and forwards them to MUT 120 (continuation with step 420). Step 450 is executed in repetitions (symbolized by the REPEAT arrow).

In other words, generator unit 150 (with network 155) provides test input sequence 210|S with test input statements 210-s. In sequence 210|S, the instructions can be single-statement instructions and multi-statement instructions.

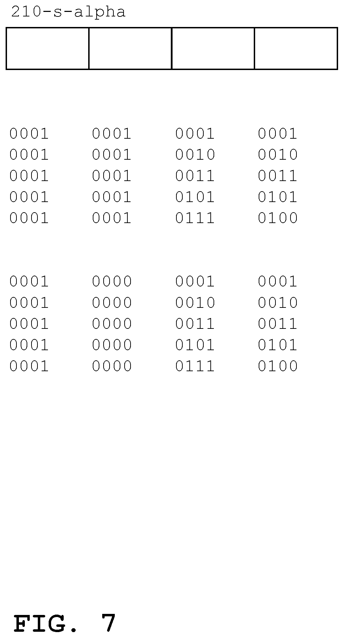

For many test scenarios, the further statements would be different from their predecessors. (For endurance testing, belonging to behavior testing, the statements may remain the same). As network 155 (in generator unit 150) has been trained, it continues to modify the statements (cf. FIG. 7). But modifications continue to correspond to the pre-defined architecture of the computing device (i.e., to MUT 120).

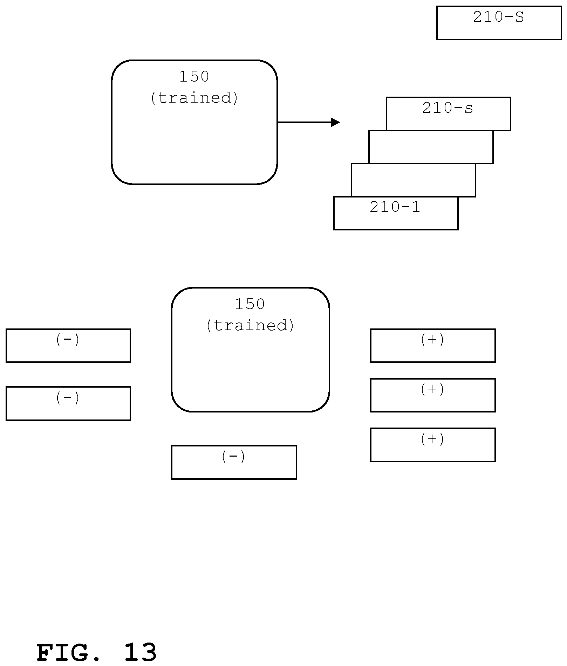

It is possible (while generating a test input sequence 210|S, or between generating a plurality of test sequences) to modify the operation of the generator. The flow-chart symbolizes this optional approach by showing step 470: controlling by feedback. Consequently, the generator would provide test input statements that would better perform during testing. In other words, controlling by feedback allows optimizing the neural network. Details for that optional approach are also given with FIG. 13.

Feedback (dash-dotted lines) can arrive from, for example, the operation of MUT 120 in step 420, from evaluating 440, or otherwise (e.g., from result statements 240-k, etc.). Feedback is also presented as arriving from sensors (cf. sensors 160 and 180 in FIG. 11).

Optionally, computer 100 receives feedback (270 in FIG. 11), such as, for example, in the following settings:
- When testing starts, there could be initial feedback 270 in the sense not to have K1 statements at all (or only relatively small number). In such a case, computer 100 may simply replace network 155 (switch to a differently trained network, e.g., from alpha to beta)
- During testing, feedback 270 can arrive at any time.

### Feedback also for training

As illustrated on the left side, feedback can also be used to re-train the network (cf. step 750). The REPEAT arrow symbolizes that training can be an ongoing process. The network may eventually learn that - despite being trained initially in step 710 - some test input statements may lead to undefined results (cf. FIG. 3) or may show other deficiencies (that are detectable by feedback).

Re-training the network (in step 750) is understood as changing some of the weights, but not all of them. In other words, step 750 stands for re-training the network partially.

### Start operating

As explained, network 155 has the internal structure of a GPT. It is possible to trigger the step execution (of network 155, cf. steps 410 and 450) by so-called prompts and/or by loading some so-called seed statements.

### Details

Having explained computer, training and test method in an overview, the description continues by discussing details, such as the match of the input statements to the architecture (of MUT 120) in FIGS. 5-7;

FIG. 5 illustrates a symbolic overview to the internal structures for MUT 120, with different architectures alpha (on the left side) and beta (on the right side).

For simplicity it can be assumed that the calculation function is the simple addition of two numbers (e.g., C = A + B), with single-statements instructions (cf. FIG. 3).

The architectures here are symbolically differentiated by the type of components and their internal relations (i.e., the internal structure).

Module 120-alpha (on the left side) has the following components: register 121, logic unit 122, register 123, and register 124.

Input statement 210-s-alpha should have K = 4 sections (cf. FIG. 3): a section to indicate that the result C should be stored in particular output register 121, a section to indicate the type of calculation (e.g., the code word "ADD"), a section for input number A, and a section for input number B.

Module 120-beta (on the right side) has the following components: register 121, register 122, logic unit 123, register 123, and register 124. Input statement 210-s-beta should have sections to communicate A, B, C and the type ("+" for "ADD).

There is an analogy to human language, the single input statement 210-s-alpha correspond to the verbal instruction "calculate C as the sum of A and B", and 210-s-beta corresponds to the verbal instruction "A, B and C are numbers, add A and B to C".

MUT 120-alpha would not be damaged when receiving input statement 210-s-beta (for example, during testing), but there could be an error (that could be detected by a sensor, such as sensor 160 in FIG. 11). The same applies to input statement 210-s-alpha arriving a module 120-beta. Such errors would cause time (such as delays, cf. the technical problem with the efficiency).

In other words, MUT 120-alpha and MUT 120-beta both have predefined architectures, and both architectures implement the pre-defined calculation function for that the figure gives an example.

The figure is much simplified, because computing devices (such as processors) would use internal commands and the like, and because computing devices would be responsive to much more instructions.

The examples in FIG. 5 show instructions 210-s-alpha and 210-s-beta being single-statement instructions, it is well-know in the art to provide buffers or similar short term memory elements to process multi-statement instructions.

FIG. 6 illustrates input statements 210-s-alpha and 210-s-beta with details on bit level. The input statements can be regarded to be in "machine language", for example that could the "alpha language" or the "beta language".

As illustrated from left to right, statement 210-s-alpha has
- N1 = 2 bit to identify the output register,
- N2 = 4 bit to code the operation (e.g., 0001 to code "ADD" and 0000 to code "SUB"),
- N3 = 4 bit to code the first input operand, and
- N4 = 4 bit to code the second input operand.

Input statement 210-s-beta uses a different convention.

For convenience of explanation, it is possible to see an analogy to natural languages. For example, the sentence "I read a book" has the usual order of functional parts such as the subject (i.e., the identification of the person who is acting), the activity or predicate (e.g., "read"), the object (e.g., "a book"). A person trained in English (no matter if native speaker or not) would understand this convention. Further, the trained person would be able to create sentences in a similar way by changing the subject ("I", "we", "you"), changing the activity (e.g., by changing the direction form "read" to "write"), changing the object (book, newspaper, traffic sign, etc.)

Some of the combinations would out of usual ("I write a traffic sign"), but for "testing" a person that might be suitable (the recipient of such a message might shake the head).

The equivalent sentences in a further natural language would use different vocabulary, in different order. For example, the equivalent to "I read a book" could be represented by character with the noun ("book"), a character indicating that the noun is the object, and two characters for the activity ("read"). The subject would be left out.

Due to the analogy between input statements (i.e., that form instructions) for the computer to statements in natural languages (that are directed to humans), a computer is able to learn patterns (cf. the training in FIG. 8, also feedback in FIGS. 4 and 11). For example, the computer would learn that the sequence "subject, activity and object" (for the alpha architecture) occurs more frequently than other sequences. The computer does not have to know the underlying semantics (no need to consider that books, newspapers etc. are the "objects" for read, write etc. activities).

But the computer would be able to make variations. For example, starting from "I read a book", the computer could create statements like "You read a newspaper", "we write patent applications", etc. The analogy (for the purpose of explanation) stops here, and it should be noted that the computer creates a bit pattern (that is directed to the module under test but not to a human).

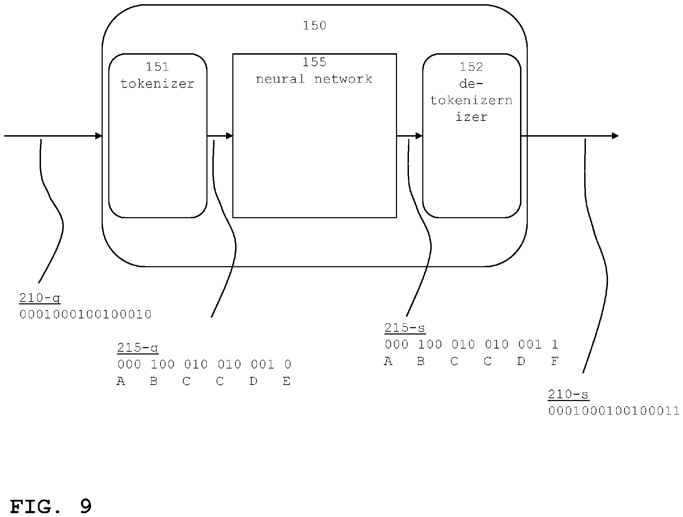

This principle to let neural network 155 generate statements in variations has two aspects that are further detailed in the following:
- the statements use bits, (cf. FIGS. 3, 6 and 7, some bit combinations may be typical for a particular architecture), and
- the network processes bits by codes (cf. FIG. 9).

### Input statements for different architecture

FIG. 7 illustrates input statement 210-s for the alpha architecture, in variations. With the sections (cf. FIGS. 3 and 6) from left to right, there are more variations in sections 3 and 4 than in sections 1 and 2.

Network 155 can learn that pattern. It can generate test input sequences 210|S with more bit variations in sections 3 and 4.

### Training the network

FIG. 8 illustrates neural network 155 (of generator unit 150) during training (in the above-mentioned training phase, cf. FIG. 4 training 700). As the training is un-supervised training, there is only one input required (here given on the left side): training input is a collection 210|Q of training input statements 210-q.

It is possible to have the input granularity to correspond to instructions. The figure illustrates this with some training input statements that form a training sub-sequence 210|Q#. (For example, the instruction "ADD A, B SUB C JUMP 0, D" of FIG. 3 would be available, in the bits of machine language such as the training sub-sequence.)

As already mentioned, collections of such machine code are available (e.g., programs that had been compiled already).

However, network 155 can receive feedback 270 as explained, via an optional auxiliary input. Receiving feedback 270 (and using feedback) has already been discussed with the flow-chart of FIG. 4, such as in optional step 470 ("controlling by feedback").

In the example, feedback 270 indicates that some statements 210(+) should be used to generate variations therefrom. Statements 210(+) provide positive feedback (to enhance the generation of similar statements), and statements 210(-) provide negative feedback (the generation of variations should be avoided). An embodiment is further outlined with FIG. 13.

### Connecting the network

To ensure efficient processing, neural networks can internally process data in a format that differs from the format at its input and at its output. The skilled person can apply suitable data adaptation techniques, such as encoding and decoding. It is possible to optimize the internal data format in view of different formats for the input sequences.

### Encoding and decoding

FIG. 9 illustrates a block diagram of generator unit 150 with encoder sub-unit 151, neural network 155, and decoder sub-unit 152. Sub-units 151 and 152 can be implemented as if they would encode text to code or would decode code to text, in other words sub-unit 151 can have a text encoder function, and sub-unit 152 can have a text decoder function.

As the figure illustrates generator unit 150 during training, encoder sub-unit 151 receives training input statements 210-q (cf. FIG. 8), with for example a word with 16 bits (word length, cf. FIGS. 6-7). Encoder sub-unit 151 codes the statement (e.g., 0001000100100010) into code words (e.g., 000 coded to A, 100 coded to B, 010 coded to C, 001 coded to D, and 0 coded to E, leading to the code statement "A B C C D E"). The figure also uses uppercase letters for different code words, but in implementations, the code words have numerical values.

During training (cf. steps 710, 750 in FIG. 4, with multiple input statements 210-q, cf. FIG. 8), neural network 155 learns to generate test input statements 210-s. An example is given as code statement 215-s (A B C C D F, with F coding 1). Decoder sub-unit 152 converts the code statements back to bits (e.g., to 0001000100100011).

Statements 210-q (training) and 210-s (testing) are similar in the sense that they belong to a particular language (e.g., to alpha).

Encoder sub-unit 151 and decoder sub-unit 152 can be specific to particular "languages" of the input statement, or they can be language agnostic. As the languages are specific to the architecture, encoder sub-unit 151 (and decoder sub-unit 152) can operate according to the particular architecture. Providing encoder and decoder sub-units 151/152 by machine-learning with training is possible, but within the expertise of the skilled person.

### Looking at the time

As mentioned above, there is an overall goal to manufacture the computing device that provides the computing function. The approach (with training, method etc.) also applies to the intermediate goal to test the design of the device before it is to be implemented in hardware.

### Design stages

FIG. 10 illustrates a diagram with design stages (sometimes called design phases, development states etc.) for the computing device. The figure symbolizes stages by way of example with large arrows.

The stage "specify function" leads to a specification document. For example, the document lists the functions that the device should be able to perform. For example, it specifies the addition of two numbers to a third number, specifies the number format (e.g., integer) and so on. This document should allow to obtain a reference master, for example, a software program that allows a computer to perform the function. Such a software program would be written in a high-level programming language (such as, for example, C). The program could serve a reference (e.g., in reference module 130 if implemented by a simulation computer (or emulation computer), cf. FIG. 1).

Such a reference master is frequently called the "Golden Master".

The stage "code to hardware description language (HDL)" leads to a document in HDL that can be used as MUT 120. In that case, MUT 120 is a design under test (DUT) 120~1, and computer 100~1 comprise emulation modules that allow anticipating the operation of DUT 120~1. HDLs are well-known in the art, and, for example, register transfer level (RTL) abstraction applies HDLs like VERILOG and VHDL to create high-level representations of circuits and the like (i.e., the processing devices in general).

The stage "identify components" is illustrated with multiple arrows. This merely symbolizes that the components (such as 121, 122, 123, 124 in FIG. 5) would have to be manufactured (and arranged according to a particular architecture, cf. FIG. 5 as well). This stage also comprises to identify actual circuit wiring from HDL documents.

Until here, the skilled person may describe the design stages with terms such as "pre-silicon" or the like. From here, the term "post-silicon" could be used. It is however noted that the hardware does not have to implemented with Si substrates, the material does not matter.

The stage "implement in hardware" symbolizes that the computing device would have to be manufactured (at least as a prototype). This leads to hardware under test (HUT) 120~2 (or "device under test"). Computer 100~2 would be implemented accordingly, for example, with converters to convert statements 210-s to signals at physical level (to be forwarded to logical input 120-IN, cf. FIG. 1), and to convert signals from the hardware to output statements 220-k (via logical output 120-OUT) or the like.

The skilled person is familiar with design stages and can plan them otherwise. Computers to test DUTs and HUTs are known in the art (cf. step 401 in FIG. 4), and operating generators to provide random sequences or fuzzing sequences is known.

As the generator is implemented by a neural network, the figure identifies training opportunities, here by vertical lines.

Training 1 stands for the opportunity to obtain training input statements 210-q (cf. FIG. 8) at least in preliminary versions (for logical inputs and the like).

Training 2 stands for the opportunity to obtain training input statements 210-q in a more detailed version, because the availability of MUT 120 as DUT 120~1 in HDL implies that the emulation computer (that emulates DUT 120~1) would receive test input statements. Training 2 can also comprise to re-train the network.

Training 3 stands for the opportunity to obtain training input statements 210-q in a still more detailed version, because some design may have changed (from the DUT 120~1 stage), some additional test (even for behavior) can be performed for hardware (i.e., HUT 120~2)

Training 4 stands for the opportunity to re-train the network.

### Feedback unit

FIG. 11 illustrates a diagram of computer 100 as well a MUT 120 in an embodiment with sensor feedback unit 170.

In computer 100, generator unit 150 executes the method to provide the test input sequence 210|S (cf. method 400 in FIG. 4). Evaluator unit 140 is illustrated here as part of computer 100.

Generator unit 150 is adapted to receive feedback data 270 from MUT 120 (via sensor feedback unit 170 as sensor feedback data 270-SENSOR) and is thereby adapted to control its neural network 155 (step 470 in FIG. 4, for example, by adapting its weights). There are at least two purposes for this feedback: to enhance the generation of particular input statements 210(+), or to block the generation of particular input statements 210(-). The (+) and (-) notation symbolizes that the feedback can be positive or negative. () would symbolize the non-availability of feedback.

Sensor feedback unit 170 receives feedback data as follows:

First feedback data 260 arrives from first sensor 160 that is associated with the computing components (e.g., 121, 122, 123, 124) of MUT 120. The skilled person is familiar with collecting data in a so-called "white box" approach, because the components are accessible.

Sensor 160 senses module-internal data. Sensing can be implemented, for example, by exception handlers or execution tracers. For example, an exception handler can raise an exception for situations that are not defined, as such divisions over zero (the computing function of the device). An execution tracer may track which components of MUT 120 participate in the processing.

Second feedback data 280 arrives from second sensor 180 that is associated with the logical output of MUT 120 or is associated with measurement sensors to measure physical behavior of MUT 120. Using second feedback data 280 may assist in testing the behavior of MUT 120, for example, its energy consumption. Sensor 180 would be an example for the so-called "black box" testing approach.

Sensor 180 can be sensitive to the function of MUT 120. Test output statements are "expected" if they fit to the function, otherwise they are "non-expected" output statements. For example, for a function (OUTPUT = INPUT_NUMBER_1 + INPUT_NUMBER_2) to add two integer numbers (that can be coded in the sections of an input statement 210-s), the test output statements are expected to be correct (e.g., 2 + 2 = 4) and the results are expected to be in the correct format (e.g., integer). If the test output statements are real numbers (not integers), they may be incorrect.

In other words, in the example, the test output statements are expected to be integer numbers as well (quality standard). For example, an output as a real number would indicate a deviation from the standard.

Figure and description differentiate sensors 160 and 180, but having a "white box" and a "black box" is a metaphorical simplification, the skilled person can apply sensors otherwise (that would be "gray box" sensors).

### Feedback from the evaluator unit

Feedback data 240-EVALUATOR can arrive from evaluator unit 140 (cf. test result statements discussed above with FIG. 1). Evaluator unit 140 may classify the test output statements (cf. i.e. be a quality indicator, such as defined (1) and un-defined (0)). Likewise, third feedback data 240-EVALUATOR can be positive (+) or negative feedback (-). The feedback sign (i.e., (+) or (-)) can be established by applying pre-defined rules (e.g., non-defined output statements (0) lead to (-)).

As already mentioned with FIG. 4, feedback 270 can let generator unit 150 switch models. For example, testing 401 may start with test input statements in alpha (from a network trained to generate "alpha"), but the feedback may detect un-defined test output statements. Consequently, generator unit 150 may switch to that parts of network 155 that have been trained to generate "beta".

### Configurations

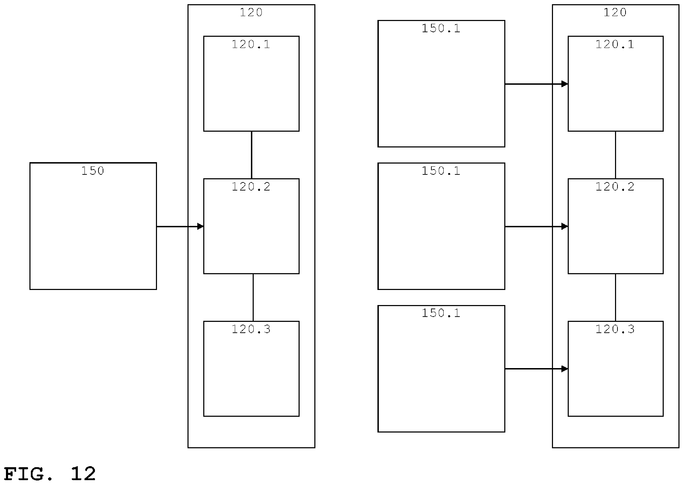

FIG. 12 illustrates MUT 120 with components MUT 120.1, 120.3 and 120.3 and two different configurations for generator unit 150.

The computing device to be manufactured can comprise several units (that each comprise computing components (cf. FIG. 5). The components in each unit can be different, and the units can be arranged in different pre-defined architectures.

For example, a computing system may comprise a central processing unit (CPU), a graphics processing unit (GPU), and a image processing unit (that may be a neural network on an FPGA). The unit would have different architectures.

Therefore, the MUT has different granularity: MUT 120 should stand for the computing system as a whole (architecture "alpha"), and MUT 120.1, 120.2 and 120.3 should stand for units (with architectures alpha1, alpha2, alpha3).

The units should communicate with each other. This is symbolized by lines (between MUT 120.1 and 120.2 as well as between MUT 120.2 and MUT 120.3, with other communication links possible).

As illustrated on the left side, a single generator module 120 can provide input statements for MUT 120 as a whole, and its network would have been trained to provide input statements for architecture alpha. The statements may comprise statements for alpha1, alpha2 and alpha3 as well.

As illustrated on the right side, multiple generator units 150.1., 150.2 and 150.3 had been trained separately for the different architectures of the units, such as to provide statements for unit 120.1 (alpha1), unit 120.2 (alpha2), and unit 120.3 (alpha3).

### Details regarding feedback

FIG. 13 illustrates a classification of generated test input statements according to feedback. The figure thereby gives an example for optionally (re-)training the neural network by reinforcement learning (e.g. proximal policy optimization).

As illustrated in the upper part of the figure, trained generator unit 150 (i.e., its network) provides initial test statements 210-1 to 210-S (i.e., test input sequence 210|S). This corresponds to step 410 of FIG. 4.

As illustrated in the lower part of the figure, test statements 210-1 to 210-S are distinguished, based on the feedback (cf. feedback 270). For example, test input statements 210-s can result into
- test input statements that lead to defined test output statements (1), or
- test input statements that lead to undefined test output statements (0), cf. FIG. 3.

Based on the feedback, the network can be retrained to enhance the generation of particular input statements 210(+) (or - in implementations - to block the generation of particular input statements 210(-)). In the example, re-training would seek to prefer the generation of input statements leading to defined output statements (1). In view of the policy, there would be optimization to enhance the generation.

### Reward agents

Scoring the statements (and/or sequences) and processing the feedback by network 155 (being re-trained, step 750 in FIG. 4) can be implemented by reward agents to apply reinforcement learning (RL). The following paper can be useful: John Schulman et al. "Proximal Policy Optimization Algorithms", arXiv:1707.06347

The skilled person can differentiate probabilistic reward agent and deterministic reward agents, and can use them in different training phases.

### Cleanup and Optimization

(Language Cleanup). Once initial training step is completed (cf. FIG. 7, 710), generator unit 150 still can generate test input sequences for that the output statements are showing mistakes (and/or the result statements, cf. FIG. 3). For example, the input sequences may show wrong or illegal combinations of instructions. This appears as if generator unit 150 could commit errors.

An optional refinement step (i.e., part of re-training 750, FIG. 4) could reduce the errors and could increase the above-mentioned efficiency. The refinement could be done "offline" (while input sequences from generator unit 150 are not being forwarded to MUT 120). Negative feedback would help to clean up the generation to prevent the generator from generating such input sequences.

For this purpose, the reward agent can be a language disassembler (that converts generated input sequences back to statements in languages).

Since a probabilistic reward agent would introduce uncertainty, a deterministic reward agent could provide further guidance during training, leading to better optimization policies and more precise network updates (i.e., higher efficiency).

Cleanup increases efficiency because it increases the quality of the input sequences (cf. FIG. 4, (0) and (1) etc.). In terms of the above-used explanatory language analogy, the generator would have learned to "speak" the "alpha" (or "beta" etc.) languages much better.

(Optimization). Another optional refinement can be applied at runtime (i.e., while generator unit 150 provides test input sequences for MUT 120) to further train network 155. This can be performed by a deterministic reward agent. The source of the feedback can change to, for example: hardware coverage, detected bugs/vulnerabilities, side-channel information. The description has already explained that such feedback can be obtained through sensors (e.g., sensors 160, 180).

### Use-case scenarios

In terms of testing, equipment to be manufactured can also be referred to as target hardware. The following gives further examples for HUT 120~2 (cf. FIG. 10), wherein testing can be performed as early as possible (cf. MUT 120 being DUT 120~1).

Targeted hardware (for testing) can be, for example,
- (in view of the functions) general-purpose processing units (e.g., central processing unit CPU, graphic processing unit GPU, data processing unit DPU, tensor processing unit TPU, neural processing unit NPL, trusted execution environments TEE.
- (in view of specializations), the processing units not necessarily "general-purpose" but customized (with an increased potential to show deviations).
- (in view of the implementation) the processing units being, for example, embedded processors, being microcontrollers, PLCs, being so-called complete system on chip SoC that integrates one or more processing units on a single chip
- (in view of the use cases) satellites and space hardware devices,
- (in view of the interaction with others) network hardware devices etc.

For simplicity of explanation, feedback has been described in general terms. The following is a list of further feedback embodiments that may be use.

Feedback mechanisms can be provided on function/code coverage metrics (e.g., conditions, finite-state machines FSM, registers, multiplexers, toggles, etc.)

The above phenomena (that could be used as feedback) can be monitored by physical measurements such as measuring power consumption, measuring timing information, evaluating heatmaps or electromagnetic radiation profiles.

As mentioned, the computing function can comprise security functionality. The skilled person is familiar with guided-fuzzing, such as to obtain an indication of how close current input (or the like) point to a potential bug or to a potential vulnerability. Feedback from measurements can be used to fine-tune network 155 by re-training it.

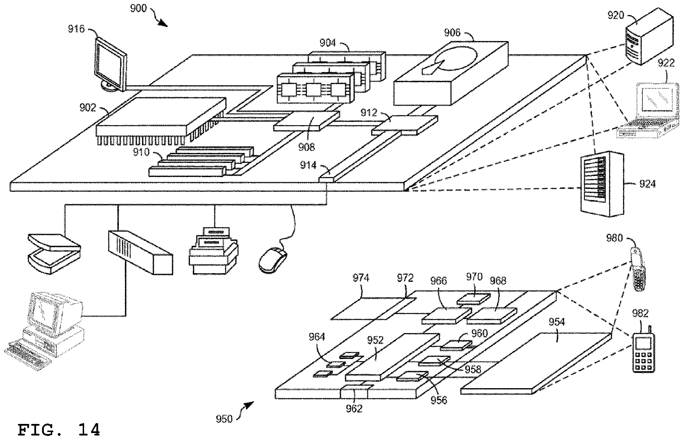

FIG. 14 illustrates an example of a generic computer device which may be used with the techniques described here. FIG. 14 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computers that have been illustrated by other figures. Computing device 950 is also intended to represent various forms of mobile devices, such as personal digital assistants, cellular telephones, smart phones, driving assistance systems or board computers of vehicles and other similar computing devices. For example, computing device 950 may be used as a frontend by a user to interact with the computing device 900. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, causes the computer to perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network (LAN), a wide area network (WAN), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims

### References

- 100: computer
- 120: module under test (MUT)
- 120~1: design under test (DUT)
- 120~2: hardware under test (HUT)
- 121-124: computing components
- 130: reference module
- 140: evaluator unit
- 150: generator unit
- 160/180: first /second sensor
- 210|S: test input sequence
- 210-s: test input statements
- 210-Q: training input sequence
- 210-q: training input statements
- 210|r: test input statement sub-sequence
- 211-i: data sections (test, training)
- 220-k: test output statements
- 230-k: test output statements (as reference)
- 260/280: first/second feedback data
- 400/4**: method/steps
- 401: testing
- 700/710/750: training
- alpha, beta: architectures
- N: word length, number of bits per statement

## Claims

1. Computer (100) adapted to control testing (401) a pre-defined function (FUNCTION) of a computing module (120), the module under test (120), comprising components (121, 122, 123, 124) arranged in a pre-defined architecture (alpha, beta), the computer (100) having a generator unit (150) that is adapted to generate a test input sequence (210|S) with test input statements (210-s) for the module under test (120), the computer (100) **characterized in that** the generator unit (150) is implemented as a neural network (155) that is a language model, and that applies a weight set obtained by training (710) the neural network (155) with a training input sequence (210|Q) of training input statements (210-q) that are configured according to the pre-defined architecture (alpha, beta) of the components (121, 122, 123, 124), and the generator unit (150) is adapted to obtain feedback data (270) from the module under test (120) and to re-train the neural network (155).

2. Computer (100) according to claim 1, wherein the neural network (155) has an implementation in a structure of a generative language model that is a generative transformer.

3. Computer (100) according to any of claims 1 or 2, wherein the generator unit (150) comprises
• an encoder sub-unit (151) that is adapted to code the training input statements (210-q) into input code statements (215-q) during training (710), and
• a decoder sub-unit (152) that is adapted to de-code output code statements (215-s) to the test input statements (210-s) for the module under test (120) during the generation (410, 450) of the test input sequence (210|S),
wherein both the encoder sub-unit (151) and the decoder sub-unit (152) are pre-trained according to the training input statements (210-q) that belong to the pre-defined architecture (alpha, beta).

4. Computer (100) according to any of claims 1 to 3, wherein the generator unit (150) is adapted to obtain feedback data (270) from the module under test (120) and to control (470) the neural network (155) to enhance the generation of particular input statements (210(+)), thereby optimizing the neural network (155).

5. Computer according the claim 4, wherein the generator unit (150) is adapted to control (470) the neural network (155) by partially re-training the neural network (155).

6. Computer (100) according to claim 5, wherein the generator unit (150) is adapted to receive feedback data (270, 270-SENSOR) from a sensor feedback unit (170) that - during testing (401) - monitors the module under test (120) through a first sensor (160) that obtains data that is internal to the module under test (120), or monitors the module under test (120) through a second sensor (180) that obtains data that is external to the module under test (120).

7. Computer (100) according to claim 5, further comprising a sensor feedback unit (170) that provides sensor feedback data (270, 270-SENSOR) to the generator unit (150) that is adapted to modify its weight set according to the sensor feedback data (270-SENSOR), wherein the sensor feedback unit (170) receives feedback data, selected from the following:
first feedback data (260) from a first sensor (160) that is associated with the components (121, 122, 123, 124) of the module under test (120); and
second feedback data (280) from a second sensor (180) that is associated with measurement sensors to measure physical behavior of the module under test (120).

8. Computer (100) according to claim 7, wherein the sensor feedback unit (170) is adapted to process first feedback data (260) that is selected from the following: data regarding the usage of individual components (121, 122, 123, 124) of the module under test (120), and data regarding coverage of the individual components.

9. Computer (100) according to claim 8, wherein the sensor feedback unit (170) is adapted to process second feedback data (280) that is selected from the following: data regarding activity and inactivity of the module under test (120) as a whole, and data regarding energy consumption of the module under test (120).

10. Computer (100) according to any of claims 1 to 9, that is adapted for testing (401) the pre-defined function of the module under test (120), wherein the generator unit (150) generates a test input sequence (210|S) with one or more instructions to challenge a security functionality of the module under test (120).

11. Computer (100) according to claim 1, further comprising an evaluator unit (140) that is adapted to receive test output statements (220-k) from the module under test (120) and that is adapted to provide test result statements (240-k), wherein the evaluator unit (140) is adapted to provide evaluator feedback data (270-EVALUATOR) to control (470) the neural network (155) to enhance the generation of particular input statements (210(+)), or to block the generation of particular input statements (210(-)), with the evaluator feedback data (270-EVALUATOR) selected from the following:
• data indicative that the output statements (220-k) are categorized into a first category of expected statements and a second category non-expected statements,
• data indicative of the quality of the output statements (220-k),
• data indicative of correct statement execution,
• data indicative of expected module behavior.

12. Computer (100) according to claim 11, wherein the generator unit (150) and the evaluator module (140) are adapted to communicate with the module under test (120) that is implemented, selected from the following: a module with an environment in that the pre-defined function is described by in hardware description language, and a module implemented with the components in hardware.

13. Use (400) of a neural network (155) that has an internal structure of a generative language model to generate (410, 450) a test input sequence (210|S) with test input statements (210-s) to test a pre-defined function (FUNCTION) of a computing module (120) that is available during testing as a module under test (120), wherein the computing module (120) has components (121, 122, 123, 124) that are configured according to the pre-defined architecture (alpha, beta), wherein the neural network (155) has weights obtained by training with an training input sequence (210|Q) of training input statements (210-q) that are configured according to the pre-defined architecture (alpha, beta).

14. Computer-implemented method (400, 700) to provide a test input sequence (210|S) for testing (401) a pre-defined function (FUNCTION) of a computing module (120) that comprises components (121, 122, 123, 124) arranged in a pre-defined architecture (alpha, beta) for providing the pre-defined function, with
training (710) a neural network (155) - having an internal structure of generative language model - with a training input sequence (210|Q) of training input statements (210|q) that are configured according to the pre-defined architecture (alpha, beta) of the components (121, 122, 123, 124); and
by the neural network (155), generating (410, 450) the test input sequence (210|S) with test input statements (210-s) for the computing module (120).

15. Method (400, 700) according to claim 14, further comprising: providing the test input sequence (210|S) having the test input statements (210-s) to the computing module (120), operating (420) the computing module (120), and repeating (750) the training (750) by reinforcement leaning with feedback selected from the following:
first feedback data (260) from a first sensor (160) that is associated with the components (121, 122, 123, 124) of the computing module (120);
second feedback data (280) from a second sensor (160) that is associated with measurement sensors to measure physical behavior of the computing module (120); and
third feedback data that is associated with the data output of the computing module (120).
